# EUROPEAN PATENT SPECIFICATION

(11) **EP 0 381 774 B1**
(45) Date of publication and mention of the grant of the patent: **25.05.1994**
(21) Application number: 89908852.0
(22) Date of filing: 27.07.1989
(51) Int. Cl.: B60G 17/00, B60G 17/08, B60G 21/00

(54) **SUSPENSION CYLINDER CONTROL SYSTEM OF VEHICLES**
REGELUNGSSYSTEM DES AUFHÄNGUNGSKOLBENS FÜR FAHRZEUGE
SYSTEME DE COMMANDE DE CYLINDRE DE SUSPENSION POUR VEHICULES

(30) Priority: 29.07.1988 JP 99961/88 U
(43) Date of publication of application: 16.08.1990
(73) Proprietor: KABUSHIKI KAISHA KOMATSU SEISAKUSHO, Minato-ku Tokyo 107 (JP)
(72) Inventor: NAGAI, Takao Kawasaki Factory of K. K., Kawasaki-shi, Kanagawa-ken 210 (JP)
(74) Representative: Allam, Peter Clerk
(86) International application number: PCT/JP89/00769
(87) International publication number: WO 90/01427

(56) References cited:
- EP-A- 0 145 013
- JP-A- 5 957 009
- JP-A- 6 296 112
- JP-A-57 182 505
- JP-A-59 106 307
- JP-U- 6 227 810
- PATENT ABSTRACTS OF JAPAN vol. 10, no. 187 (M-493)(2243) 2 July 1986,& JP-A-61 30407 (KAYABA IND CO LTD) 12 February 1986,
- PATENT ABSTRACTS OF JAPAN vol. 12, no. 190 (M-704)(3037) 3 June 1988,& JP-A-62 299416 (TOYOTA MOTOR CORP) 26 December 1987,

## Description

The present invention relates to suspension systems for motor vehicles and, more particularly, to a damping force control system of a suspension system mounted between a vehicle body and front and rear right and left wheels of a load bearing motor vehicle.

There has been known in the prior art such a suspension system in which front and rear wheels are mounted on a vehicle body through suspension cylinders in order to prevent the passage, up to the vehicle body, of the bouncing of the front and rear wheels during a drive along a rough road.

The vehicle body provided with this type of suspension system undesirably tends to make an outward tilt, or a body roll, on cornering, with a centrifugal force acting to contract the outer suspension cylinders of the motor vehicle.

In order to prevent the body roll, there has previously been suggested a system comprising means to detect a steering angle or a steering angular velocity when the steering wheel is manipulated, for the purpose of increasing a damping force of the outer suspension cylinders of the vehicle when the vehicle is rounding a curve, thereby restraining contraction of the suspension cylinders by centrifugal force.

However, in the detection of the steering angle alone, the steering wheel must be turned to a set steering angle to obtain a desired damping force of the suspension cylinders. That is, the suspension cylinders cannot quickly respond to steering conditions, and therefore a vehicle body roll in the initial period of a turn cannot be prevented.

In the detection of the steering angular velocity, when the vehicle is turned on a fixed circle with the steering wheel fixed at a prescribed steering angle, the damping force of the outer suspension cylinders cannot be increased and accordingly it is impossible to prevent a body roll.

JP-A-61-30407 describes an anti-roll system for a motor vehicle in which the damping force applied to the mountings of the wheels is controlled in response to an output signal from a controller. The output signal is dependent upon signals received by the controller from a steering speed sensor, a vehicle speed sensor, and a pressure sensor which measures the differences in load pressure between left and right wheels.

Another system is described in JP-A-62-299416. The system is designed to improve control over the roll of a vehicle during cornering, and does so by monitoring the difference in pressure between the fluid chambers of actuators for the right and left suspension cylinders.

The roll-suppressive control system described in EP-A-145013 incorporates a steering angle senor and vehicle speed sensor. The system operates by increasing the damping force in the wheel mountings when the rate of change of steering angle exceeds a threshold value. Pressure sensors are not used.

The present invention provides a suspension cylinder control system for a motor vehicle having a raisable dump body capable of bearing a load, the system comprising: for each of the right and left front and rear wheels a suspension cylinder mounted between the vehicle body and the respective wheel; pressure sensing means associated with the suspension cylinders; steering wheel sensing means for detecting a parameter associated with the steering of the vehicle; vehicle speed sensing means; means for varying the damping force of each of said suspension cylinders; and a controller adapted to receive signals from all said sensing means, and to provide an output signal to vary the damping force in each of said suspension cylinders, characterised in that the pressure sensing means is adapted to sense the internal oil pressure in each of the suspension cylinders; and in that the steering wheel sensing means is adapted to sense the steering angle of the vehicle; the system further comprising: brake sensing means for sensing the application of the vehicle brakes; and means for sensing the raised condition of the dump body; the controller being adapted to produce an output signal that causes an increase in damping force in the cylinders in response to the detection of any of the following conditions: (a) the rate of change of the steering angle exceeds a predetermined value; (b) the application of the vehicle brakes when the vehicle speed is higher than a predetermined value; (c) the dump body is in the raised condition; and in the case that the rate of change of the steering angle exceeds a predetermined value, said controller (10) causes said increased damping to be maintained until the signals from the pressure sensing means indicate that the oil pressure difference between the right and left suspension cylinders of the front and rear wheels has decreased below a predetermined value.

The invention enables a suspension cylinder control system for load bearing motor vehicles to be constructed, which is capable of obtaining the optimum suspension characteristics according to vehicle load. Some embodiments permit driving stability to be improved by intensifying the damping mode of the suspension cylinders when the vehicle speed has increased over a specific speed. Other embodiments are capable of preventing a body roll on turns, with no delay of response, particularly on turns at high speed, and can prevent body roll on turns on a fixed circle.

Furthermore, the invention provides a suspension cylinder control system which is capable of preventing a nose dive (a downward plunging of the front end of the vehicle body). by intensifying the damping mode of the suspension cylinders at the time of brake application and, on the other hand, preventing the nose up of the vehicle body by intensifying the damping mode when the dump body is raised for unloading.

Preferred embodiments further comprise an air solenoid valve means adapted to receive a damping force changeover signal from the controller, and to drive a damping force changeover means provided on the suspension cylinder.

The invention is hereinafter described by way of example only, with reference to the accompanying drawings, in which:-
Fig.1 is an exemplary schematic view of a suspension cylinder control system according to one embodiment of the present invention;
Fig. 2A is a longitudinal sectional view of the suspension cylinder used in the embodiment shown in Fig. 1; and
Fig. 2B is a sectional view taken along line B-B in Fig. 2A.

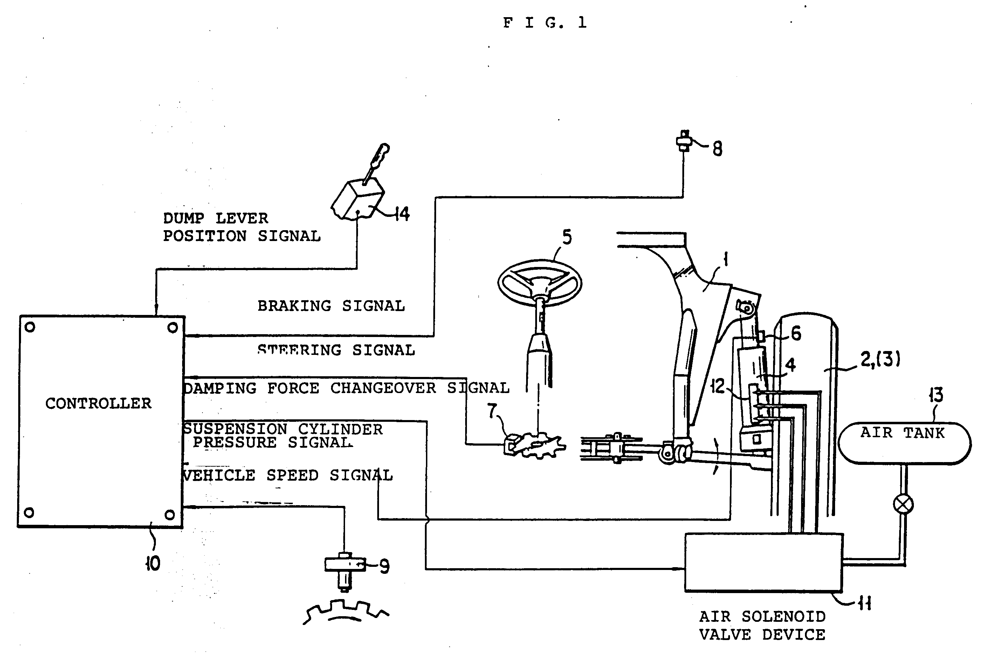

Fig. 1 is an exemplary drawing schematically showing the control system of the present invention. In this drawing, front wheels 2 and rear wheels 3 are mounted on the right and left front sides of a vehicle body 1 and on the right and left rear sides respectively (Fig. 1 shows wheels on one side only) through a suspension cylinder 4, such that when the steering wheel 5 is manipulated as shown in Fig. 1, the front wheels 2 are steered. The control system is provided with a pressure sensor 6 which detects the pressure in each suspension cylinder 4, a steering angle sensor 7, a brake sensor 8, and a vehicle speed sensor 9. From these sensors are outputted detection signals to a controller 10. Furthermore, there is provided an air solenoid valve device 11 for changing the damping force of the suspension cylinder 4 by means of a damping force changeover signal from the controller 10.

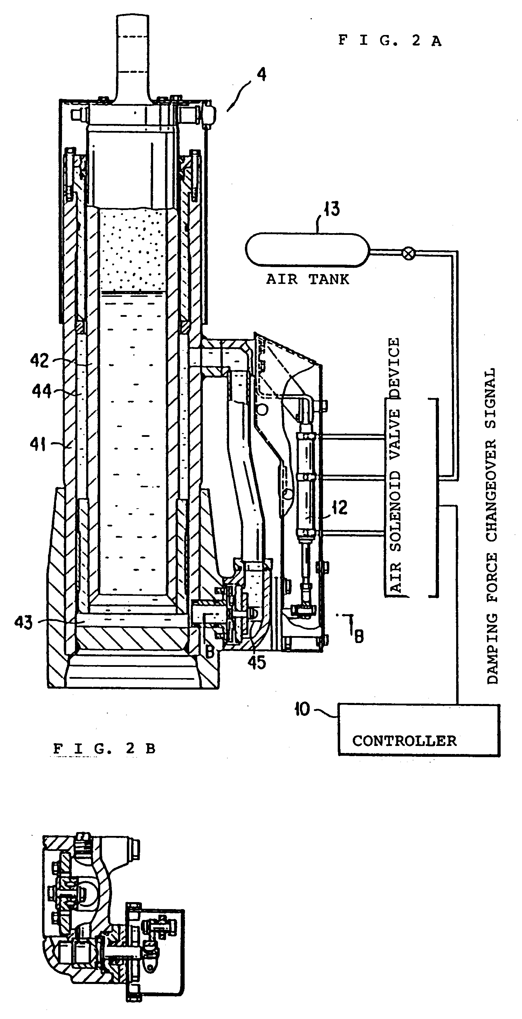

That is, as shown in Figs. 2A and 2B, each suspension cylinder 4 is of such a construction that a piston 42 is inserted in a cylinder tube 41 to form an expansion chamber 43 and a contraction chamber 44, which are connected through a throttle 45, and the damping force of the suspension cylinder 4 is changed by changing the area of the opening of the throttle.

Therefore, the damping force of the suspension cylinders 4 is changed by feeding the air from an air tank 13 to the actuator 12 through the air solenoid valve device 11.

Furthermore, when the steering angular velocity from the steering angle sensor 7 has exceeded its set value, the controller 10 outputs an exciting signal to the air solenoid valve device 11 to icnrease the damping force of the suspension cylinder 4. Also when an oil pressure difference between the right and left suspension cylinders 4 has been decreased below a fixed value by the oil pressure from the pressure sensor 6, the controller 10 outputs a demagnetizing signal of the air solenoid valve device 11 in order to reduce the damping force of the suspension cylinder 4.

In the suspension cylinder control system, the above-mentioned construction, when the steering wheel 5 is turned, the damping force of the suspension cylinder 4 increases, thereby preventing a body roll with good response on cornering. Also when an oil pressure difference between the right and left suspension cylinder 4 exceeds a fixed value, a great damping force is maintained, thus locking the steering wheel in a manipulating position to prevent the body roll when the vehicle is rounding a curve.

In the embodiment shown in Fig. 1, a vehicle speed signal is fed by the vehicle speed sensor 9 to the controller 10 and a brake signal by the brake sensor 8 also to the controller 10, such that the aforementioned exciting signal is not outputted to the air solenoid valve device during a low-speed travel but is outputted only during a high-speed travel, and that during brake application, the exciting signal is fed to the air solenoid valve device 11 in order to prevent the nose dive, or the downward plunging of the front end of the vehicle body.

Furthermore, in the case of a construction vehicle such as a dump truck, the front end of the vehicle body tends to float up when the dumping body (not illustrated) is raised, and therefore to prevent this nose up, a dump lever position sensor 14 is provided so that when the dump body is raised for unloading, a dump lever position signal is outputted from the sensor 14 to the controller 10, which in turn supplies a damping force changeover signal to the air solenoid valve device 11. The air solenoid valve device 11 operates to increase the damping force of the suspension cylinders 4, thereby preventing the nose up of the vehicle body 1.

## Claims

1. A suspension cylinder control system for a motor vehicle having a raisable dump body capable of bearing a load, the system comprising: for each of the right and left front and rear wheels (2,3) a suspension cylinder (4) mounted between the vehicle body and the respective wheel; pressure sensing means (6) associated with the suspension cylinders (4); steering wheel sensing means (7) for detecting a parameter associated with the steering of the vehicle; vehicle speed sensing means (9); means for varying the damping force of each of said suspension cylinders (4); and a controller (10) adapted to receive signals from all said sensing means, and to provide an output signal to vary the damping force in each of said suspension cylinders (4),
characterised in that
the pressure sensing means (6) is adapted to sense the internal oil pressure in each of the suspension cylinders (4); and in that the steering wheel sensing means is adapted to sense the steering angle of the vehicle; the system further comprising: brake sensing means (8) for sensing the application of the vehicle brakes; and means (14) for sensing the raised condition of the dump body; the controller (10) being adapted to produce an output signal that causes an increase in damping force in the cylinders (4) in response to the detection of any of the following conditions:
(a) the rate of change of the steering angle exceeds a predetermined value;
(b) the application of the vehicle brakes when the vehicle speed is higher than a predetermined value;
(c) the dump body is in the raised condition;
and in the case that the rate of change of the steering angle exceeds a predetermined value, said controller (10) causes said increased damping to be maintained until the signals from the pressure sensing means (6) indicate that the oil pressure difference between the right and left suspension cylinders (4) of the front and rear wheels has decreased below a predetermined value.

2. A suspension cylinder control system as claimed in Claim 1, further comprising an air solenoid valve means (11) adapted to receive a damping force changeover signal from said controller (10), and to drive damping force changeover means (12) provided on said suspension cylinders (4).

## Patentansprüche

1. Regelvorrichtung für die Stoßdämpferzylinder der Radaufhängung eines Motorfahrzeuges mit einer höhenverstellbaren Kippmulde zum Aufnehmen einer Ladung mit: einem Stoßdämpferzylinder (4) für jedes der rechten und linken Front- und Heckräder (2,3), der jeweils zwischen dem Fahrzeuggestell und dem jeweiligen Rad angeordnet ist; mit mit den Stoßdämpferzylindern (4) verbundenen Druckfühlern (6); einem Lenkungssensor (7) zum Aufnehmen der lenkungsbezogenen Parameter des Fahrzeugs; einem Geschwindigkeitssensor (9); einer Vorrichtung zum Variieren der Dämpfungskraft jedes Stoßdämpferzylinders (4); und einer Regelvorrichtung (10), um Signale von allen genannten Sensoren zu empfangen und um ein Ausgangssignal zum Ändern der Dämpfungskraft in jedem der Stoßdämpferzylinder (4) zu liefern,
dadurch gekennzeichnet,
daß an jedem der Dämpfungszylinder (4) daß ein Druckfühler (6) zum Erfassen des internen Öldrucks angebracht ist; daß der Lenkungssensor zum Aufnehmen des Lenkwinkels des Fahrzeugs ausgelegt ist; und daß das System weiterhin folgende Teile umfaßt: einen Bremsfühler (8) zum Erfassen des Einsatzes der Fahrzeugbremsen; und Mittel (8) mm Erfassen der erhöhten Kippmuldenstellung; wobei die Regelvorrichtung (10) zum Erzeugen eines Ausgangssignals ausgelegt ist, das eine Steigerung der Dämpfungskraft in den Zylindern (4) als Reaktion auf das Anzeigen eines der folgenden Zustände bewirkt:
(a) der Gradient des Lenkwinkels übersteigt einen vorbestimmten Wert;
(b) der Einsatz der Fahrzeugbremsen, wenn die Geschwindigkeit einen vorbestimmten Wert übersteigt;
(c) die Kippmulde ist in der angehobenen Stellung
und in dem Fall, daß der Gradient des Lenkwinkels einen vorbestimmten Wert überschreitet, die Regelvorrichtung (10) bewirkt, daß die höhere Dämpfung bestehen bleibt, bis die Signale der Druckfühler (6) anzeigen, daß die Öldruckdifferenz zwischen dem rechten und linken Dämpfungszylinder (4) der Front- und Heckräder unter einen vorbestimmten Wert gefallen ist.

2. Regelvorrichtung nach Anspruch 1, gekennzeichnet durch ein Magnetluftventil (11), ausgelegt zum Empfangen eines Dämpfungskraft-Umschaltsignals von der Regelvorrichtung (10) und zum Betätigen von an dem Dämpfungszylinder (4) vorgesehenen Dämpfungskraft-Umschaltmitteln (12).

## Revendications

1. Système de commande de cylindres de suspension pour un véhicule automobile ayant une carrosserie basculante relevable capable de porter une charge, le système comprenant: pour chacune des roues droites et gauches, avant et arrière (2,3) un cylindre de suspension (4) monté entre la carrosserie du véhicule et la roue respective; un moyen de détection de la pression (6) associé aux cylindres de suspension (4); un moyen de détection du volant de direction (7) pour détecter un paramètre lié à la direction du véhicule; un moyen de détection de la vitesse du véhicule (9); un moyen pour faire varier la force d'amortissement de chacun des cylindres de suspension (4); et un contrôleur (10) adapté pour recevoir des signaux de tous lesdits moyens, et pour fournir un signal de sortie pour faire varier la force d'amortissement dans chacun desdits cylindres de suspension (4),
caractérisé en ce que
le moyen de détection de la pression (6) est adapté pour détecter la pression d'huile interne dans chacun des cylindres de suspension (4); et en ce que le moyen de détection du volant de direction est adapté pour détecter l'angle de braquage du véhicule; le système comprenant en outre: un moyen de détection des freins (8) pour détecter l'actionnement des freins du véhicule; et un moyen (14) pour détecter la condition relevée de la carrosserie basculante; le contrôleur (10) étant adapté pour produire un signal de sortie qui provoque une augmentation de la force d'amortissement dans les cylindres (4) en réponse à la détection de l'une ou plusieurs des conditions suivantes:
(a) la vitesse de changement de l'angle de braquage dépasse une valeur prédéterminée;
(b) l'actionnement des freins du véhicule quand la vitesse du véhicule est supérieure à une valeur prédéterminée;
(c) la carrosserie basculante est en condition relevée;
et, dans le cas où la vitesse de changement de l'angle de braquage dépasse une valeur prédéterminée, ledit contrôleur (10) fait maintenir ledit amortissement augmenté jusqu'à ce que les signaux émis par le moyen détecteur de pression (6) indiquent que la différence de pression d'huile entre les cylindres de suspension droits et gauches (4) des roues avant et arrière a baissé en-dessous d'une valeur prédéterminée.

2. Système de commande de cylindres de suspension selon Revendication 1, comprenant en outre un moyen d'électrovanne d'air (11) adapté pour recevoir un signal d'inversion de la force d'amortissement dudit contrôleur (10), et pour commander le moyen d'inversion de force d'amortissement (12) prévu sur lesdits cylindres de suspension (4).
